# EUROPEAN PATENT APPLICATION

(11) **EP 1 804 175 A1**
(43) Date of publication of application: **04.07.2007**
(21) Application number: 06077181.3
(22) Date of filing: 06.12.2006
(51) Int. Cl.: G06F 17/28

(54) **An acoustic and visual device for simultaneously translating information**

(30) Priority: 29.12.2005 DE 202005020399 U
(71) Applicant: Barutto, Mauro, 68309 Mannheim (DE)
(72) Inventor: Barutto, Mauro, 68309 Mannheim (DE)
(74) Representative: Gotra, Stefano

(57) **Abstract**

A device for simultaneous translation of acoustic and/or visual information, comprising: at least an input peripheral (20, 21, 22), predisposed to acquire information to be translated; a first operating module (2), predisposed to receive in input the acquired information and to process the acquired information in order to extract therefrom a content in a form of a digital text which susceptible to electronic processing; a second operating module (3), predisposed to receive in input the content extracted from the acquired information and to translate the content into a determined language, which comprises: a learning module (7) based on actuation of a learning algorithm which, by interacting with a word and complete phrase memory (9, 10) in a plurality of languages, attributes to the extracted content from the acquired information a complete sense in the language of acquisition of the information; a translation module (8) which is based on actuation of a translation algorithm which interacts with the word and complete phrase memory (9, 10) in order to produce a translation of the extracted content of the acquired information into one or more languages which are different to the language in which the information was acquired; at least a peripheral in output (23, 24) predisposed for communication of translated content to a user in a verbal or acoustic form.

## Description

The invention relates to a device for simultaneously translating, which information can be acoustic or visual.

In particular the invention relates to a device which is suitable for translating messages or phrases, communicated in a source language verbally and/or in written form, into a target language. The result of the translation can be communicated by the device both verbally and in writing.

The prior art includes devices able to translate phrases or words from one language to another. These devices are mostly constituted by electronic dictionaries, or palm-held device provided with a keyboard by means of which a word to be translated can be entered. The device performs the translation by means of integrated circuits of known type and displays the translated word on a display.

The translation of words or brief phrases can also be performed by a personal computer, using special translation software based on linguistic dictionaries of greater or lesser size.

Also known is a device able to scan a written text using a video camera and to translate the contents, giving either a visual or an acoustic result in a different language.

The described devices are not however able to translate words or phrases which are verbally communicated, nor are they able to communicate the translation thereof verbally.

An aim of the present invention is therefore to provide a device for simultaneous translation of information of an acoustic or visual type which is able to translate messages or phrases, communicated in a source language verbally and/or in written form, into a target language, in which the result of the translation can be communicated by the device both verbally and in written form.

The device is preferably provided with a microphone which enables a verbally-communicated text to be acquired. The device is further able to perform a simultaneous translation of the text it has acquired. An advantage of the device of the present invention is that it enables immediate and direct correspondence with an interlocutor speaking a different language, without the need for an interpreter. The device makes it possible to obtain a simultaneous translation of all currently-known languages, and is therefore useful both in private situation, for personal interaction, and in a professional or industrial situation. The device enables a selection of both the language in input and in output, and also offers a choice of language fields to which reference will be made for the translation.

The device is further and preferably provided with a microcamera which enables a written text (in any form) to be acquired. The device is further able to translate the written text acquired and communicate it verbally to the user.

A further advantage of the invention is that it enables partially-sighted persons, or illiterate persons, to "read" and understand a text written both in their own language and in a foreign language.

The device can be provided with a display which is able to show the scene scanned by the camera. In this way the translation of a text picked up by the camera can be shown on the display in proximity of or in substitution for the original text. For example, the writing on a road signpost in an unknown language can be replaced on the display by the translation thereof into a known language, in the same part of the display as the original writing.

The device is preferably made integral with a mobile cellular telephone, so as to be perpetually available and easily transportable by the user. The microphone used for acquiring a verbal communication is preferably the same microphone used by the telephone, and the loudspeaker used for the verbal communication of the translation can be the one belonging to the telephone. The camera used by the device for acquiring the images can be of the type which is in widespread use in mobile telephones equipped for video communication.

Further characteristics and advantages of the device will better emerge from the detailed description that follows, made with reference to the appended figures of the drawings, provided by way of non-limiting example, in which:

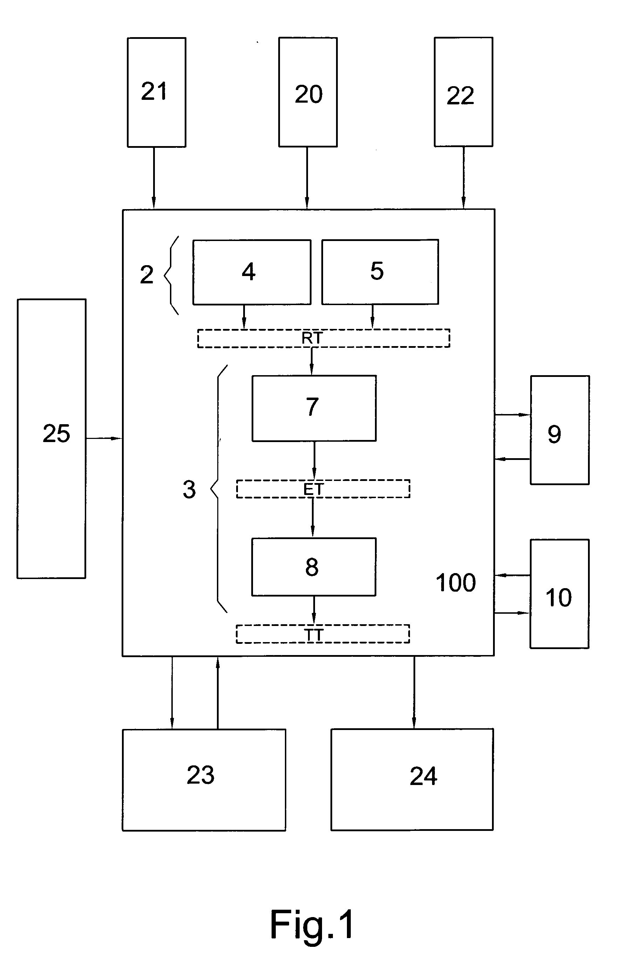

Figure 1 is an overall block diagram of the device of the present invention;

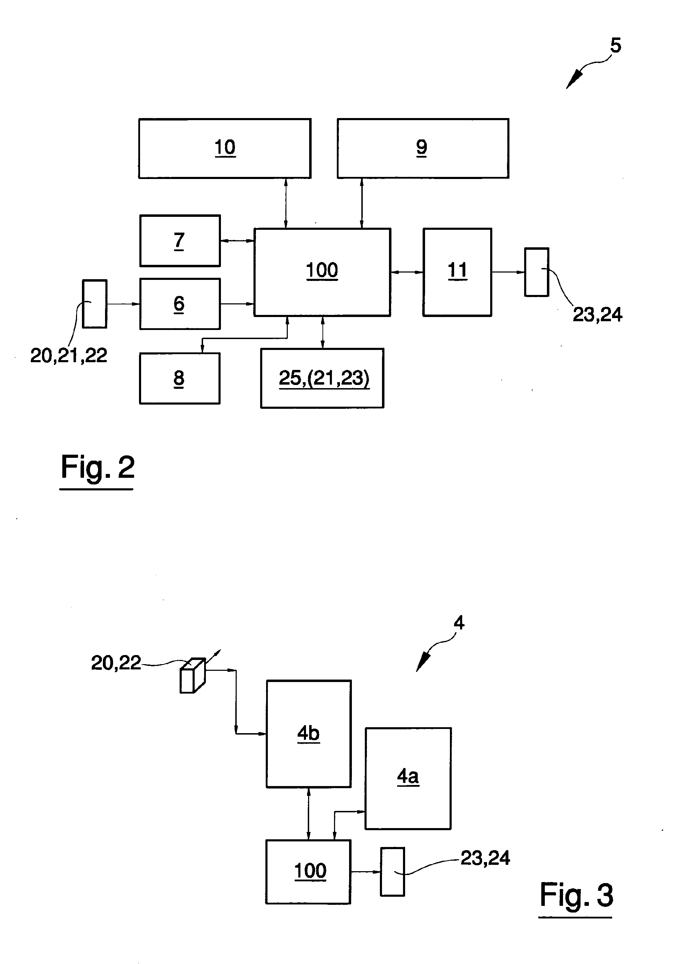

Figures 2 and 3 shown the block diagrams of two operating modules of the device of figure 1;

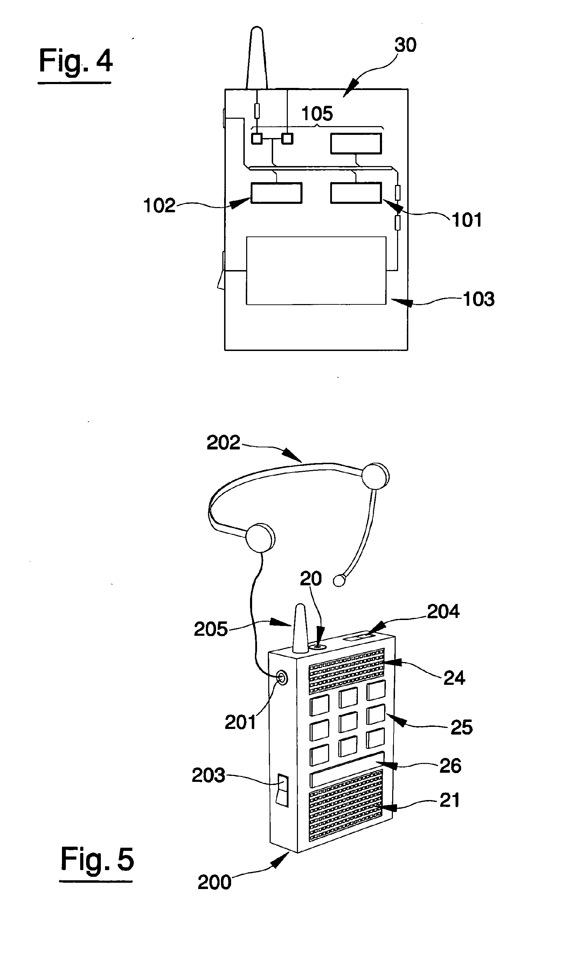

Figure 4 is a preferred embodiment of a main electronic circuit of the device of figure 1;
Figure 5 is an external schematic perspective view of the device of the present invention.

With reference to the figures of the drawings, the device comprises one or more peripheral devices in input which are predisposed for acquiring the information to be translated. The peripherals in input can comprise for example a television camera 20, a microphone 21, a radio-television tuner 22 and more besides, in general any device able to acquire information and translate it into an analog or digital form.

The data acquired is sent to at least a microprocessor 100 to which the peripherals in input are connected. The microprocessor 100 is predisposed to actuate a plurality of functional algorithms which define, internally of the device, two main operating modules 2, 3 for processing the data acquired.

A first operating module 2 receives in input the acquired data and processes it in order to extract therefrom a content in the form of an electronically processable digital text (ET). The first operating module, in turn, can be subdivided into a video module 4 and an audio module 5.

The video module 4 is predisposed to receive in input a video image, acquired for example by a microcamera, and can process the video image in order to extract therefrom a digital text by means of an OCR algorithm. The OCR algorithm bases its functioning on an interaction with a memory of letters and symbols the meaning of which is recognised by the microprocessor 100. The algorithm performs a comparison, by means of known algorithms, between the video content acquired and the letters and symbols stored in the memory 4a, and consequently attributes a meaning to the video content acquired.

The video module is based on the performing of an algorithm which identifies a precise static image, possibly following a command given by the user, and processes the static image, extracting therefrom a bitmap structure, filtering the noise, detecting the borders, straightening the areas and recognising the graphic signs present (letters or symbols) which define the overall content to be processed (or a part thereof) extracted from the acquired visual data. If the video input peripheral is not digital, the video module can be provided with an analog/digital converter for converting the video image received in input into a digital image.

The audio module 5 is predisposed for receiving in input a sound flow, and for processing it in order to extract therefrom a content in the form of a digital text by performing a sound-recognising algorithm.

The audio module is based on performing an algorithm which identifies from the entering sound flow a precise sequence, possibly also following a command made by the user, and processes the identified sequence, filtering the noise and recognising the phonemes in the sequence which define overall the content to be processed (or a part thereof), extracted from the acquired sound information. If the audio input peripheral is not digital, the audio module 5 can be equipped with an analog/digital converter 6 for converting the sound flow in input into a digital sound flow.

The second operating module 3 is predisposed to receive in input the content extracted (ET) from the acquired data and to translate the content into a determined target language. The second operating module 3 can be sub-divided into a learning module 7 and a translating module 8.

The learning module 7 is based on actuation of a learning algorithm which, interacting with a word and phrase memory 9, 10 in a plurality of languages, attributes a full meaning to the content extracted from the acquired data. Using the learning algorithm a comparison is made between the words and/or phrases defined in the content extracted from the acquired information and the words and/or phrases in the memory. Using known comparison procedures, the words and/or phrases defining the content extracted from the data in input are placed against words and/or phrases present in the memory which the microprocessor knows the meaning of.

The known content (RT) from the learning module 7 passes to the translation module 8. The translation module is based on actuation of a translation algorithm which interacts with the word and complete phrase memory 10, to produce the translation of the acquired data into one or more different languages to the source language. Using the translation algorithm, the known words and/or phrases recognised by the learning module are substituted by words and/or phrases having the same meaning in a different language. The target language for the initial information can be selected by the user. The word and/or phrase memory on which the learning algorithm and the translation algorithm are based can be organised in different thematic areas, for example economics, travel, family or others, internally of which a determined number of words and phrases can be identified which occur most frequently. By selecting the most appropriate thematic area the execution of the learning and translating algorithms are facilitated, rendering the results of the processing operations faster and more accurate.

The translated content (TT) can be communicated to the user in verbal form or visual form, via an output peripheral which can be constituted for example by a display 23 and/or a loudspeaker 24. At the user's choice, translated content can be shown in a written form on the display or can be communicated verbally via the loudspeaker. To actuate the latter choice, the device is provided with a verbal synthesis module 11 which processes the translated content in order that it can be communicated through the loudspeaker. In a case where the language in input and the language in output coincide, thanks to the presence of the verbal synthesis module the device can be used as a reader, to then provide the user with a verbal version thereof.

The device is provided with means for controlling predisposed to enable the user to interact with the device. The means for controlling can be constituted for example by a keyboard 25 and/or a touch-screen device applied to the display 23. Alternatively, or in combination with the previous solutions, the device can be controlled verbally via the microphone 21 through which, using the above-described learning algorithm, determined commands can be given to the device. In this way it is possible for example to select the language in input and the language in output, to select a suitable thematic language area, establish the start and end of an audio flow to be translated, frame the words to be translated using the video camera.

Form a constructional point of view, the device comprises an integrated circuit 30 provided, apart from with other electronic components 105 of known type necessary for the circuit operation, with at least a first microchip 101 which actuates the first operating module and substantially enables reception of the verbal information, the filtering and the extraction of the content to be processed, and with at least a second microchip 102 which actuates the second operating module and enables learning and translation of the extracted content. The integrated circuit is powered by a rechargeable battery 103. In a preferred embodiment, the device is integrated into a mobile cellular telephone, in which the first microchip 101 also controls the telephone reception, while the second microchip also controls the telephone transmission. In the preferred embodiment the battery 103 also powers the telephonic functions of the device.

The device comprises an external casing 200 preferably made of a light material (plastic, magnesium or titanium). Internally of the casing 200, apart from the integrated circuit there are also the loudspeaker 24 and the microphone 21, arranged preferably as in a normal cellular telephone. On a surface of the casing 200, preferably in an intermediate position between the loudspeaker 24 and the microphone 21, a numeric keyboard is located which can be used to dialogue with the microchip in order to dial a telephone number or to enter a written text, and one or more further keys 26 which can for example be predisposed to enter some settings directly, such as the choice of a language, or another setting. The external side of the casing affords a connector (not visible in the figures) for recharging the battery, a connector 201 for an earphone 202 and a key 203 for turning the device on and off, which can be combine with a pilot light 204 for indicating the operating state of the device. The video camera 20 and an antenna 205 also for transmission and reception of data and information, project from the casing.

Naturally, apart from the above-cited constructional solution and the embodiment in which the device is integrated into a cellular telephone, the device can also be integrated into any kind of electronic apparatus, in particular electronic apparatus which are suitable for communication, for example a personal computer, a palm-held computer, radio transmitters and the like.

The device can provide extremely useful and advantageous functions.

Using the video camera, the apparatus can read and verbally translate a written document. In this way, persons having sight problems can read and understand a written text (for example a newspaper, a menu, a signpost..) both in the individual's own language and in a foreign language. It is important to note that the most advance OCR algorithms are able to distinguish between images and text. Thus, the device can be programmed in such a way that, whatever the direction of reading (from top to bottom or left to right or vice versa), the images present on the page are not taken into consideration and it is therefore possible to read only the textual parts. This is very important inasmuch as it enables, for example the warnings to be read on a package. The reading scan can be started by a simple pressure on a key (or by moving a mini-joystick) or using any other instrument which enables sending a command to the device.

The first and the second operating modules can activate the microcamera and frame a scene in order to perform a translation of all the text present in the frame. Thereafter the translation can be shown on the device display in a superimposed position on the original writing, enabling for example a translation of road signs written in a language not known by the user. An example of a particularly advantageous use is one in which the device is used on board a vehicle. In this case the video camera can be arranged in a position which enables the camera to have the same view as the driver, and the translation of the signals and road signs framed can be shown to the driver on a special screen located, for example, on the dashboard, or the information can be communicated verbally via the vehicle radio loudspeaker device. In general, the use of the device with regard to translating and communicating written texts can obviously be extended to text appearing on any type of monitor or display (for example personal computers, palm-held computers, electronic diaries and so on).

The device can further be operatively connected to other devices by cables or other means for connecting of known type, in order to place the functions thereof in communication with remote devices.

## Claims

1. A device for simultaneous translation of acoustic and/or visual information, **characterised in that** it comprises:
at least an input peripheral (20, 21, 22), predisposed to acquire information to be translated;
a first operating module (2), predisposed to receive in input the acquired information and to process the acquired information in order to extract therefrom a content in a form of a digital text which is susceptible to electronic processing;
a second operating module (3), predisposed to receive in input the content extracted from the acquired information and to translate the content into a determined language, which comprises: a learning module (7) based on actuation of a learning algorithm which, by interacting with a word and
complete phrase memory (9, 10) in a plurality of languages, attributes to the extracted content from the acquired information a complete sense in the language of acquisition of the information; a translation module (8) which is based on actuation of a translation algorithm which interacts with the word and complete phrase memory (9, 10) in order to produce a translation of the extracted content of the acquired information into one or more languages which are different to the language in which the information was acquired;
at least an output peripheral (23, 24) predisposed for communication of translated content to a user in a verbal or acoustic form.

2. The device of claim 1, wherein the first operating module (2) comprises a video module (4), predisposed to receive in input a video image and to process the video image in order to extract content therefrom in a form of a digital text, by means of execution of an OCR algorithm.

3. The device of claim 2, wherein the video module (4) comprises an analog/digital converter (4b) for conversion of the video image received in input into a digital image.

4. The device of claim 1, wherein the first operating module (2) comprises an audio module (5), predisposed to receive in input a sound flow and to process the sound flow in order to extract content therefrom in a form of a digital text by means of execution of a recognition algorithm.

5. The device of claim 4, wherein the audio module (5) comprises an analog/digital converter (6) for conversion of the sound flow received in input into a digital sound flow.

6. The device of at least one of the preceding claims, wherein the at least a peripheral in input comprises a telecamera (20).

7. The device of at least one of the preceding claims, wherein the at least a peripheral in input comprises a microphone (21).

8. The device of any one of the preceding claims, wherein the at least a peripheral in input comprises a radio-television tuner (22).

9. The device of at least one of the preceding claims, wherein the at least a peripheral in output comprises a display (23).

10. The device of any one of the preceding claims, wherein the at least a peripheral in output comprises a loudspeaker (24).

11. The device of at least one of the preceding claims, comprising means for controlling which are predisposed to enable the user to interact with the device.

12. The device of claim 11, wherein the means for controlling comprise a keyboard (25).

13. The device of claim 11 or 12, wherein the means for controlling comprise a touch-screen device applied to the display (23).

14. The device of one of claims from 11 to 13, wherein the means for controlling comprise the microphone (21), by means of which the user can impart determined instructions to the device.

15. A cellular telephone device, comprising a device according to at least one of the main claims, the device being functionally integrated in the cellular telephone apparatus.

16. An electronic apparatus for communication, comprising a device according to at least one of the main claims, the device being functionally integrated into the electronic apparatus.
